# EUROPÄISCHE PATENTANMELDUNG

(11) **EP 0 814 118 A1**
(43) Veröffentlichungstag der Anmeldung: **29.12.1997**
(21) Anmeldenummer: 97108862.0
(22) Anmeldetag: 03.06.1997
(51) Int. Cl.: C08J 11/14

(54) **Verfahren zur Hydrolyse von Kunststoffen, insbesondere Polyurethanen**

(30) Priorität: 17.06.1996 DE 19622761
(71) Anmelder: BAYER AG, 51368 Leverkusen (DE)
(72) Erfinder: Quiring, Bernd Dr., 51377 Leverkusen (DE); Münzmay, Thomas Dr., 41539 Dormagen (DE)

(57) **Zusammenfassung**

Die vorliegende Erfindung betrifft ein Verfahren zur Hydrolyse von Kunststoffen, die in der Polymerkette hydrolytisch spaltbare chemische Bindungen (Gruppierungen) enthalten, das dadurch gekennzeichnet ist, daß man bei Temperaturen von 20 bis 240°C, gegebenenfalls unter Druck, die eingesetzten Kunststoffe mit Wasser in Gegenwart von einem Hydrolysat des gleichen oder eines ähnlich aufgebauten Kunststoffs so lange behandelt, bis der zu hydrolysierende Kunststoff vollständig im Hydrolysegemisch gelöst ist.

## Beschreibung

Die vorliegende Erfindung betrifft ein Verfahren zur Hydrolyse von Kunststoffen, insbesondere von Polyurethanen.

Zum Recycling von Kunststoffen, insbesondere Polyurethanen, sind verschiedene Verfahren bekannt. Zur Wiedergewinnung der Polyurethanroh- bzw. -einsatzprodukte sind insbesondere Pyrolyse-, Glykolyse- und Hydrolyseverfahren beschrieben.

Die einfache Hydrolyse mit Wasser war als Universalverfahren bisher nicht möglich, weil die Polymeren außer bei hohem Gehalt an hydrophilen Komponenten unter Normalbedingungen in Wasser nicht löslich oder ausreichend aufquellbar sind. Deshalb war in den in der (Patent-)Literatur bekannten Verfahren entweder hoher Druck oft in Verbindung mit überhitztem Wasserdampf notwendig, wie z.B. beschrieben in der französischen Patentschrift 1 364 855, den deutschen Patentschriften 2 362 921, 2 442 387, der europäischen Patentschrift 0 011 662, den US-Patentschriften 4 328 368, 4 281 197 und 3 978 128, den deutschen Patentschriften 861 926, 2 207 379, der japanischen Patentschrift J 50110-495, J 51 114 496 sowie 05 031 000. Für die Durchführung der in den genannten Schriften beanspruchten Verfahren sind Autoklaven oder spezielle Druckreaktoren wie Zweiwellenschneckenreaktoren oder besondere Gegenstromreaktoren notwendig, die apparativ einen verhältnismäßig hohen Aufwand verursachen. Eine in der Literatur beschriebene andere Möglichkeit, die Druckreaktoren umgeht, besteht in der Verwendung von (organischen) Lösungsmitteln für die Reaktion. Diesen kommt insbesondere die Aufgabe zu, die Polyurethane zu lösen oder wenigstens stark anzuquellen, damit die eigentliche Hydrolysereaktion in möglichst homogener Phase ablaufen kann. Bevorzugte Lösungsmittel sind meist solche mit Zerewitinoff aktiven Gruppen, wie Amine (Japanische Patentschrift 73-05280) oder Alkohole, wie z.B. Dipropylenglykol, Ethandiol, Diethylenglykol und Glycerin (z.B. US-Patentschriften 4 316 992, 4 317 939, europäische Patentschrift 059 594; J. Gerlock in Ind. Eng. Chem. Proc. Des. Dev. 1984, S. 545 ff). Es sind aber auch z.B. hochsiedende Kohlenwasserstoffe (J. Gerlock in Ind. Eng. Chem. Proc. Des. Dev. 32 (1984) S. 552) oder Dialkylether (japan. Patentschrift 54 117 580) als Hilfslösungsmittel beschrieben worden.

Außerdem sind Verfahren bekannt, die sowohl unter Druck als auch mit Lösungsmittel ablaufen (US-Patent 4 316 992, deutsche Patentschrift 2 207 379). All diesen Verfahren ist gemeinsam, daß die verwendeten Lösungsmittel vor der Wiederverwendung der rückgewonnenen PUR-Rohstoffe erst wieder entfernt werden müssen. Falls diese Lösungsmittel Zerewitinoff aktive Gruppen haben, reagieren auch die mit dem abzubauenden Polyurethan, und es entstehen neue zusätzliche Bruchstücke, deren Abtrennung, falls sie notwendig wird, schwierig ist. Außerdem lassen höhersiedende, als Hilfslösungsmittel eingesetzte Alkohole sich oft schwierig von den Hydrolyseprodukten abtrennen, so daß z.B. Polyolgemische mit relativ hohem Hydroxylgruppengehalt gewonnen werden, deren Wiederverwendung für die ursprüngliche Anwendung oft nicht möglich ist.

In Gegenwart größerer Mengen starker Säuren (Japan. Patentschrift 72-51238) oder starker Basen (z.B. US-Patentschrift 5 208 379) ist die PUR-Hydrolyse scheinbar ohne weitere Zusätze möglich, jedoch fällt dabei eine größere zu entsorgende Salzmenge an.

Es wurde nun ein Verfahren gefunden, das es bei geringem Aufwand an Energie, Apparaten und Rohstoffen ermöglicht, Polyurethane, Polyurethanharnstoffe und andere hydrolysierbare Kunststoffe in ihre Rohstoffe zu zerlegen, ohne daß dabei eine Erhöhung der Produktmenge eintritt.

Gegenstand der vorliegenden Erfindung ist demnach ein Verfahren zur Hydrolyse von Kunststoffen, die in der Polymerkette hydrolytisch spaltbare chemische Bindungen (Gruppierungen) enthalten, das dadurch gekennzeichnet ist, daß man bei Temperaturen von 20 bis 240°C, gegebenenfalls unter Druck, die eingesetzten Kunststoffe mit Wasser in Gegenwart von einem Hydrolysat des gleichen oder ähnlich aufgebauten Kunststoffes solange behandelt, bis der zu hydrolysierende Kunststoff vollständig im Hydrolysegemisch gelöst ist.

Nach dem erfindungsgemäßen Verfahren können alle Kunststoffe eingesetzt werden, die in der Polymerkette hydrolytisch spaltbare (und damit die Polymerketten aufbauende) chemische Bindungen bzw. Gruppierungen enthalten. Als hydrolytisch spaltbare Bindungen bzw. Gruppierungen sind beispielsweise anzusehen (Thio-)Ester-, Carbonat-, Amid-, Urethan-, Harnstoff-, Acetal-, Aminal- sowie Orthoestergruppen. Bevorzugt werden in das erfindungsgemäße Verfahren Polyurethane sowie Polyurethanharnstoffe eingesetzt. Dabei sind solche Polyurethane bzw. Polyurethanharnstoffe bevorzugt, die aufgebaut sind aus nicht-hydrolysierbaren Polyolen, wie Polyethern, z.B. C₂-C₄-Polyether, sowie aus Polybutandiolen. Die Polyolprodukte können dabei bi- und höherfunktionell sein, aber auch monofunktionelle Anteile enthalten. Darüberhinaus können die zu hydrolysierenden Polyurethane bzw. Polyurethanharnstoffe aufgebaut sein aus Naturprodukten, wie Rizinusöl und/oder Leinöl, Zuckern und deren Derivate. Die Polyurethane bzw. Polyurethanharnstoffe können die nicht-hydrolysierbaren Polyole einzeln oder im Gemisch untereinander enthalten.

Selbstverständlich können die zu hydrolysierenden Kunststoffe noch andere, übliche Hilfsstoffe enthalten, wie anorganische und/oder organische Füllstoffe, wobei diese auch hydrolytisch abbaubar sein können.

Darüberhinaus ist es nach dem erfindungsgemäßen Verfahren möglich, die zu hydrolysierenden Kunststoffe einzeln oder im Gemisch untereinander in das erfindungsgemäße Verfahren einzusetzen. So können beispielsweise verschieden aufgebaute Polyurethan-Weichschäume gemeinsam nach dem erfindungsgemäßen Verfahren hydrolysiert werden.

Nach dem erfindungsgemäßen Verfahren ist es zweckmäßig, die zu hydrolysierenden Kunststoffe in zerkleinerter Form einzusetzen, da dadurch die Lösegeschwindigkeit der Kunststoffe in dem Reaktionsgemisch entsprechend erhöht wird. Aus dieser Sicht ist das erfindungsgemäße Verfahren besonders vorteilhaft für den Einsatz von Polymerschäumen.

Das erfindungsgemäße Verfahren wird bevorzugt bei Temperaturen von 80 bis 230°C, besonders bevorzugt - um einen zügigen Ablauf des Verfahrens zu gewährleisten - bei Temperaturen von 180 bis 230°C durchgeführt. Zur Beschleunigung des erfindungsgemäßen Verfahrens kann es ebenfalls von Vorteil sein, das erfindungsgemäße Verfahren unter Druck durchzuführen. Dabei haben sich Druckbereiche von bis zu 50 bar, bevorzugt bis zu 30 bar, als besonders vorteilhaft erwiesen. Führt man das erfindungsgemäße Verfahren unter Druck durch, ist es selbstverständlich möglich, einen höheren Druckbereich als den zuvor angegebenen zu wählen. Dadurch kann die Reaktionsgeschwindigkeit des Verfahrens noch erhöht werden.

Für das erfindungsgemäße Verfahren ist es wesentlich, daß die Hydrolyse der eingesetzten Kunststoffe in Gegenwart von Hydrolysat des gleichen oder ähnlich aufgebauten Kunststoffs und bei gleichzeitiger Gegenwart von Wasser durchgeführt wird.

Das erfindungsgemäß einzusetzende Hydrolysat des gleichen oder eines ähnlich aufgebauten Kunststoffs dient insbesondere zum Lösen der zu hydrolysierenden Kunststoffe. Das Lösen des zu hydrolysierenden Kunststoffes in dem Hydrolysat geschieht in vielfältiger Weise auch durch eine chemische Reaktion des eingesetzten Hydrolysats des zu hydrolysierenden Polymeren, wobei meist ein Kettenabbau abläuft. Die dabei neu gebildeten chemischen Gruppierungen werden in aller Regel durch die Einwirkung von Wasser später wieder hydrolysiert, so daß nach beendeter Reaktion das eingesetzte Spaltproduktgemisch (Hydrolysat) im allgemeinen in praktisch unveränderter Form aus dem zu hydrolysierenden Polymeren vorliegt und wiederverwendet werden kann für die Hydrolyse.

Für das erfindungsgemäße Verfahren ist es vorteilhaft, ein Hydrolysat (Spaltproduktgemisch) zu verwenden, das durch Hydrolyse des gleichen oder eines sehr ähnlich aufgebauten Kunststoffes entstanden ist, da es die gleichen Rohstoffe bzw. Aufbauprodukte wie die zu hydrolysierenden Kunststoffe enthält und somit im Hydrolysat nur die gewünschten Spaltprodukte vorliegen. In manchen Fällen sind auch Glycohydrolysate als einzusetzendes Hydrolysat verwendbar. In besonderen Fällen, wie z.B. bei Polycaprolactam, kann es sich bei dem Hydrolysat auch um eine einzige chemische Verbindung handeln, z.B. um Aminocapronsäure.

Nach dem erfindungsgemäßen Verfahren beträgt die Menge an einzusetzendem Hydrolysat 1 bis 300 Gew.-%, bezogen auf die Gesamtmenge an eingesetztem Kunststoff, bevorzugt 10 bis 150 Gew.-%. Die Menge an Wasser, die im Hydrolysegemisch zugegen sein soll, beträgt üblicherweise 0,1 bis 200 Äquivalent.-%, bezogen auf zu hydrolysierende Gruppen. Insbesondere im Hinblick auf die Reaktionsgeschwindigkeit der erfindungsgemäßen Hydrolyse ist es vorteilhaft, die zur Hydrolyse einzusetzende Wassermenge so zu wählen, daß die Temperatur des Reaktionsgemisches einen bestimmten Temperaturbereich (ca. 180 bis 190°C) nicht unterschreitet. Durch entsprechende Nachdosierung von Wasser wird der angegebene Temperaturbereich gehalten.

Das erfindungsgemäße Verfahren kann in Gegenwart oder in Abwesenheit von Katalysatoren durchgeführt werden. Als geeignete Katalysatoren kommen alle bekannten Katalysatoren in Frage, die für solche Hydrolysereaktionen beschrieben sind. Beispielsweise sind besonders geeignet starke Basen, wie Alkali- und/oder Erdalkalihydroxide, wie Natrium- oder Calciumhydroxid, oder Amine, wie z.B. Triethylendiamin, sowie starke Säuren, wie Mineralsäuren, z.B. Schwefelsäure.

Die günstigste Menge an einzusetzenden Katalysatoren kann leicht durch entsprechende Vorversuche bestimmt werden. Üblicherweise beträgt die Menge 0,01 bis 5 Gew.-% bezogen auf zu hydrolysierenden Kunststoff.

Nach dem erfindungsgemäßen Verfahren wird die Behandlung der einzusetzenden (zu hydrolysierenden) Kunststoffe mit Wasser und dem Hydrolysat solange durch-geführt, bis der zu hydrolysierende Kunststoff vollständig in dem Hydrolysegemisch gelöst ist. Die Viskosität der Mischung kann dabei individuell gewählt werden. Die Hydrolysereaktion kann gegebenenfalls abgebrochen werden, bevor sie beendet ist.

Soll z.B. der hydrolysierte Kunststoff verbrannt werden und als Brennstoff dienen, so ist es vorteilhaft, die Hydrolyse des Kunststoffes so weit zu führen, bis eine "pumpbare Viskosität" des Hydrolysegemisches erreicht ist (z.B. eine Viskosität des Hydrolysegemisches im Bereich von 1 bis 5.000 mPa.s, gemessen bei 100°C). Selbstverständlich ist es möglich, die Hydrolyse der eingesetzten Kunststoffe vollständig durchzuführen, d.h. bis der eingesetzte Kunststoff in Gänze in seine Aufbaukomponenten zerlegt ist. Die Hydrolyse ist dann als vollständig anzusehen, wenn kein Temperaturanstieg des Wasser enthaltenden Hydrolysegemisches über einen längeren Zeitraum von z.B. 15 bis 120 min. bei gleichbleibendem Druck mehr zu beobachten ist.

Eine geeignete Auführungsform des erfindungsgemäßen Verfahrens besteht darin, daß man das Hydrolysat bei geeigneter Temperatur, also beispielsweise 200°C, vorlegt und den zu hydrolysierenden Kunststoff portionsweise so zugibt, daß er sich etwa mit Zugabegeschwindigkeit löst. Wasser kann parallel oder nach Auflösen des Kunststoffs in kleinen Portionen (tropfenweise) so zugegeben werden, daß in der reagierenden Schmelze die Temperatur von 200°C nicht oder nur wenig unterschritten wird.

Das erfindungsgemäße Verfahren kann beispielsweise in der Weise durchgeführt werden, daß man den zu hydrolysierenden Kunststoff vollständig mit dem entsprechenden Hydrolysat versetzt und die entsprechende Wassermenge während der Hydrolysereaktion zudosiert. Selbstverständlich ist auch möglich, das Hydrolysat zusammen mit dem Wasser dem zu hydrolysierenden Kunststoff zuzugeben und die Hydrolyse mit der berechneten Wassermenge durchzuführen.

Das bei der erfindungsgemäßen Hydrolyse erhaltene Hydrolysat kann ganz oder teilweise wieder in die Reaktion zurückgeführt werden oder wie erwähnt energetisch genutzt werden oder gegebenenfalls nach vorheriger Aufarbeitung in die einzelnen Komponenten zur Herstellung von neuen Polymeren verwendet werden.

Das erfindungsgemäße Verfahren hat gegenüber den bekannten Recyclingverfahren von Kunststoffen insbesondere den Vorteil, daß es in einfachen, beheizbaren Reaktoren ohne Druck durchgeführt werden kann und daß praktisch nur die ursprünglich für die Herstellung der eingesetzten Kunststoffe eingesetzten Rohstoffe bzw. Einsatzkomponenten anfallen, die in einem vergleichsweise einfachen Trennungsprozeß wiedergewonnen werden können, z.B. für die Herstellung von neuen Kunststoffen.

### Beispiele

### Beispiel 1

390 Gew.-Teile eines Hydrolysats aus einem Heißformschaum, der im wesentlichen aus einem auf Trimethylolpropan gestarteten Propylenoxid(82,5 %)-Ethylenoxid(17,5 %)-Polyether mit einer Hydroxylzahl von 35 (mg KOH/g), Wasser und einem Toluylendiisocyanat-Isomerengemisch mit einem Anteil von 80 % 2,4-Diisocyanat hergestellt wurde, werden auf 220°C unter Rühren in einer Rückflußapparatur erhitzt. Das Hydrolysat hat einen Anteil von 2,7 % Aminogruppen, einen Wassergehalt von 0,25 % und eine Säurezahl von 0,6 (mg KOH/g). Wenn die gewünschte Temperatur erreicht ist, werden 400 Gew.-Teile des gleichen PUR-Schaums portionsweise dem Lösefortschritt entsprechend zugegeben. 10 Gew.-Teile Wasser werden in 4 Portionen so zugegeben, daß die Produkttemperatur im Reaktionsgefäß 200°C nicht unterschreitet. Wenn nach Zugabe von weiterem Wasser die zunächst gesunkene Reaktionstemperatur in der unter Normaldruck gehaltenen Apparatur trotz ausreichender Heizung nicht wieder deutlich ansteigt, ist die Reaktion beendet. Das Reaktionsprodukt läßt man abkühlen. Es hat bei Raumtemperatur eine Viskosität von 2400 mPas, einen Gehalt an Aminogruppen von 2,8 %, eine Säurezahl von 0,5 (mg KOH/g) und einen Wassergehalt von 1,2 %.

Es kann ähnlich wie Heizöl zum Betrieb von (industriellen) Heizungen verwendet oder wie in Beispiel 3 beschrieben aufgearbeitet werden.

### Beispiel 2

Zu 470 Gew.-Teilen eines Hydrolysats eines aus einem Glycerin und Propandiol gestarteten Ethylenoxid-Propylenoxidmischpolyether mit einer OH-Zahl von 46, Wasser und einer Mischung aus 20 % Toluylen-2,6-diisocyanat und 80 % Toluylen-2,4-diisocyanat aufgebauten PUR-Blockschaums werden im Verlauf von 6 Stunden bei 210 bis 220°C in einer gerührten, drucklosen Rückflußapparatur 2030 Gew.-Teile des für die Herstellung des vorgelegten Hydrolysats verwendeten Schaums und 35 Gew.-Teile Wasser portionsweise so zugegeben, daß die Produkttemperatur unter Heizung erhalten bleibt. Anschließend werden weitere 5 Gew.-Teile Wasser zugegeben und bei gleicher Temperatur 4 Stunden weitergerührt. Das Produkt wird bei 170°C durch ein 70 µ-Sieb gedrückt und 1 Stunde bei 120°C im Vakuum behandelt.

Das Produkt hat einen Gehalt an Aminogruppen von 3,1 %, eine Säurezahl von 0,5 und einen Wassergehalt von 0,3 %. Lt. HPLC enthält das Hydrolysat 9 % freies Toluylendiamin.

### Beispiel 3

### (Hydrolyse der Mischung verschiedener PUR-Weichschäume)

Eine Mischung aus den Abfällen von 7 verschiedenen PUR-Weichschäumen: Block-, Formschäumen, flammgeschützten und Polyester-PUR-Schäumen auf Basis von Toluylen- und Diphenylmethandiisocyanat und dessen höheren Homologen, die als Rohstoffe verschiedene verzweigte Propylenoxid- und Propylenoxid-Ethylenoxidmischpolyether unterschiedlicher Reaktivität, Polyester wie verzweigtes Diethylenglykolpolyadipat, Polyhydrazodicarbonamid, anorganisches Flammschutzmittel und Melaminharz enthält, wird in einem Hydrolysat der gleichen Schaummischung gespalten.

400 Gew.-Teile Hydrolysat werden in der in Beispiel 1 beschriebenen Apparatur bei 220°C vorgelegt. 400 Gew.-Teile Schaummischung werden im Verlauf von 4 Stunden portionsweise zugegeben. Anschließend werden 4 Gewichtsteile 50%ige Natronlauge und danach in Portionen 14 Gew.-Teile Wasser so zugegeben, daß die Reaktionstemperatur 200°C nicht unterschreitet. Es wird 3 Stunden bei 200 bis 220°C nachgerührt und die Reaktionsschmelze bei 170°C durch ein 70 µ-Sieb gedrückt. Es bleibt ein fester Rückstand von 14 Gew.-Teilen (feucht).

100 Gew.-Teile des wie in Beispiel 3 beschrieben erhaltenen Hydrolysats werden bei Raumtemperatur mit 400 Gew.-Teilen Cyclohexan und 100 Gew.-Teilen 1n Salzsäure innig vermischt. Anschließend wird absetzen gelassen und nach ca. 30 Minuten die Wasserphase von der oberen organischen abgetrennt. Die Wasserphase wird 2 weitere Male mit je 100 Gew.-Teilen Cyclohexan extrahiert. Die vereinigten organischen Phasen werden einmal mit 50 Gew.-Teilen 5%iger Schwefelsäure und zweimal mit Wasser gewaschen. Anschließend wird mit 1 Gew.-Teil Bleicherde behandelt, mit Natriumsulfat getrocknet und bei 15 mbar bei Temperaturen bis 80°C eingedampft. Es wird ein beinahe farbloses, fast klares Produkt mit einer OH-Zahl von 49 mg KOH/g, einer Säurezahl von 0,3 mg KOH/g und einem Gehalt an Amingruppen von 0,02 % erhalten.

80 Gew.-Teile dieses gereinigten Hydrolysats werden mit 20 Gew.-Teilen eines auf einer Mischung aus Glycerin und Propylenglykol gestarteten Propylen-Ethylen(10%)-oxidmischpolyethers (OH-Zahl 46 mg KOH/g), 3 Gew.-Teilen Wasser, 1,2 Teilen eines handelsüblichen Polyetherpolysiloxans, 1 Gew.-Teil einer 50%igen Lösung von Sorbit in Wasser, 0,15 Gew.-Teilen einer Mischung aus handelsüblichen Aminkatalysatoren, 0,12 Gew.-Teilen Zinn(II)octoat und 43,5 Gew.-Teilen einer Mischung aus 80 % Toluylen-2,4-diisocyanat und 20 % Toluylen-2,6-diisocyanat bei Raumtemperatur homogen gemischt und in eine mit Papier ausgekleidete, offene Kiste gegossen. Es entsteht ein optisch einwandfreier, offenzelliger Weichschaum.

## Patentansprüche

1. Verfahren zur Hydrolyse von Kunststoffen, die in der Polymerkette hydrolytisch spaltbare chemische Bindungen (Gruppierungen) enthalten, dadurch gekennzeichnet, daß man bei Temperaturen von 20 bis 240°C, gegebenenfalls unter Druck, die eingesetzten Kunststoffe mit Wasser in Gegenwart von einem Hydrolysat des gleichen oder eines ähnlich aufgebauten Kunststoffs so lange behandelt, bis der zu hydrolysierende Kunststoff vollständig im Hydrolysegemisch gelöst ist.

2. Verfahren nach Anspruch 1, dadurch gekennzeichnet, daß der zu hydrolysierende Kunststoff ein Polyurethan und/oder Polyurethanharnstoff ist.

3. Verfahren nach Ansprüchen 1 und 2, dadurch gekennzeichnet, daß die zu hydrolysierenden Polyurethane und/oder Polyurethanharnstoffe auf Basis von nicht-hydrolysierbaren Polyolen aufgebaut sind.

4. Verfahren nach Ansprüchen 1 bis 3, dadurch gekennzeichnet, daß die Hydrolyse in Gegenwart einer starken Base durchgeführt wird.

5. Verfahren nach Ansprüchen 1 bis 3, dadurch gekennzeichnet, daß die Hydrolyse in Gegenwart einer starken Säure durchgeführt wird.

6. Verfahren nach Ansprüchen 1 bis 5, dadurch gekennzeichnet, daß die Hydrolyse bei Temperaturen von 180 bis 230°C durchgeführt wird.

7. Verfahren nach Ansprüchen 1 bis 6, dadurch gekennzeichnet, daß die Hydrolyse in Gegenwart von 1 bis 300 Gew.-% Hydrolysat, bezogen auf die gesamte Menge an eingesetzten Kunststoff, durchgeführt wird.
